# EUROPÄISCHE PATENTSCHRIFT

(11) **EP 1 944 576 B1**
(45) Veröffentlichungstag und Bekanntmachung des Hinweises auf die Patenterteilung: **07.05.2014**
(21) Anmeldenummer: 07122331.7
(22) Anmeldetag: 05.12.2007
(51) Int. Cl.: G01C 21/32, G09B 29/10, G06F 17/30

(54) **Verfahren zum Aktualisieren von geographischen Daten**
Method for updating geographical information
Procédé destiné à l'actualisation de données géographiques

(30) Priorität: 12.01.2007 DE 102007001852
(43) Veröffentlichungstag der Anmeldung: 16.07.2008
(73) Patentinhaber: ROBERT BOSCH GMBH, 70442 Stuttgart (DE)
(72) Erfinder: Klein, Thomas, 31061, Alfeld (DE)

(56) Entgegenhaltungen:
- EP-A1- 1 562 021
- DE-A1- 19 842 430

## Beschreibung

### Stand der Technik

Die vorliegende Erfindung betrifft ein Verfahren zum Aktualisieren von geographischen Daten.

Aus der DE 101 46 785 ist eine Navigationsvorrichtung bekannt, die ein Speichermedium verwendet, auf dem geographische Daten als Karteneinheiten zusammengefaßt gespeichert sind, die jeweils einem geographischen Teilbereich entsprechen, wobei sich die geographischen Teilbereiche nicht überlappen. Die geographischen Daten beziehen sich dabei entweder auf einen Punkt, der durch seine Koordinate bestimmt ist, oder auf Flächen, die durch ihre Randpunkte bestimmt sind und an Karteneinheitsgrenzen aufgespalten werden. Zur Berechnung einer empfohlenen Route werden erforderliche Karteneinheiten ausgewählt und vollständig von der Navigationsvorrichtung gelesen.

Nachteilig ist, daß eine große Karteneinheit vollständig ersetzt und berechnet werden muß, wenn die in ihr zusammengefaßten geographischen Daten auch nur teilweise nicht mehr aktuell sind. Die Erstellung eines Speichermediums mit aktuellen geographischen Daten erfordert daher einen großen Aufwand.

Die Offenlegungsschrift EP 1 562 021 A1 zeigt ein Navigationsverfahren umfassend einen Aktualisierungsschritt von einem Bereich einer Karte.

Die Offenlegungsschrift DE 198 42 430 A1 zeigt ein Kartendatenverarbeitungsverfahren zum Aktualisieren von in einer Kartendatenspeichereinrichtung gespeicherten Kartendaten unter Verwendung neuester Kartendaten, umfassend einen Eingabeschritt zum Eingeben von Differenzdaten, die einen Unterschied zwischen den neuesten Kartendaten und entsprechenden in der Kartendatenspeichereinrichtung gespeicherten Kartendaten angeben.

### Offenbarung der Erfindung

Der vorliegenden Erfindung liegt die Aufgabe zugrunde, ein Verfahren zum Aktualisieren von geographischen Daten zu schaffen, das ein Aktualisieren mit relativ geringem Aufwand ermöglicht.

Die der Erfindung zugrunde liegende Aufgabe wird durch ein Verfahren mit den Merkmalen des Patentanspruchs 1 gelöst.

Erfindungsgemäß betrifft die vorliegende Erfindung ein Verfahren zum Aktualisieren von geographische Daten eines geographischen Bereichs, die als Karteneinheiten zusammengefasst sind, wobei die Karteneinheiten hierarchisch strukturiert sind, wobei die Karteneinheiten einer n-ten Ordnung jeweils einem geographischen Teilbereich entsprechen, wobei n eine natürliche Zahl ist, wobei die Karteneinheiten einer (n+1)-ten Ordnung jeweils einem geographischen Unterbereich eines der Teilbereiche entsprechen, und wobei eine bestimmte Karteneinheit durch eine Karteneinheit mit aktualisierten geographischen Daten ersetzt wird, wobei jede Karteneinheit Metadaten enthält, die anzeigen, welche Kategorie von Objekten die jeweilige Karteneinheit enthält beziehungsweise enthalten könnte, und die Verweisdaten zu den geographischen Daten enthalten, wobei die Verweisdaten auf geographische Objekte einer anderen Kategorie verweisen, die in Karteneinheiten gespeichert sind, welche eine in Vergleich zu den Karteneinheiten mit den jeweiligen Verweisdaten untergeordnete Ordnung haben.

Vorteilhafterweise ist der Zeitaufwand bei der Erstellung von aktualisierten geographischen Daten verringert.

In einer bevorzugten Ausführungsform wird die Karteneinheit mit aktualisierten geographischen Daten aus der bestimmten Karteneinheit erzeugt, indem geographische Daten, die ein Objekt betreffen, hinzugefügt werden.

In noch einer bevorzugten Ausführungsform wird die Karteneinheit mit aktualisierten geographischen Daten aus der bestimmten Karteneinheit erzeugt, indem geographische Daten, die ein Objekt betreffen, geändert werden.

In noch einer bevorzugten Ausführungsform wird die Karteneinheit mit aktualisierten geographischen Daten aus der bestimmten Karteneinheit erzeugt, indem geographische Daten, die ein Objekt betreffen, gelöscht werden.

In noch einer bevorzugten Ausführungsform wird eine weitere Karteneinheit mit Verweisdaten durch eine Karteneinheit mit aktualisierten Verweisdaten ersetzt wird.

Vorteilhafterweise kann die Verknüpfung eines Objekts mit einem Objekt in der weiteren Karteneinheit aktualisiert werden, ohne geographischen Daten der weiteren Karteneinheit zu verändern.

### Kurze Beschreibung der Zeichnungen

Im folgenden wird die Erfindung mit Bezugnahme auf die Zeichnungen näher beschrieben. Es zeigen:
- FIG. 1: eine Karte eines geographischen Teilbereichs, die geographische Daten aufweist, die in einer Karteneinheit der ersten Ordnung gespeichert sind;
- FIG. 2A: eine Karte, die aus der Karteneinheit der 1. Ordnung aus FIG. 1 und Karteneinheiten der 2. Ordnung zusammengesetzt ist;
- FIG. 2B: geographische Daten einer der Karteneinheiten der zweiten Ordnung aus FIG. 2A;
- FIG. 3A: eine aktualisierte Karte, die mit der Karte aus FIG. 2A bis auf die geographischen Daten einer aktualisierten Karteneinheit identisch ist;
- FIG. 3B: geographische Daten der aktualisierten Karteneinheit aus FIG. 2A;
- FIG. 4A: eine weiter aktualisierte Karte, die mit der Karte aus FIG. 3A bis auf die geographischen Daten einer weiter aktualisierten Karteneinheit identisch ist;
- FIG. 4B: geographische Daten der weiter aktualisierten Karteneinheit aus FIG. 3A; und
- FIG. 5: Speichermedium mit aktualisierten geographischen Daten aus FIG. 3A.

### Ausführungsformen der Erfindung

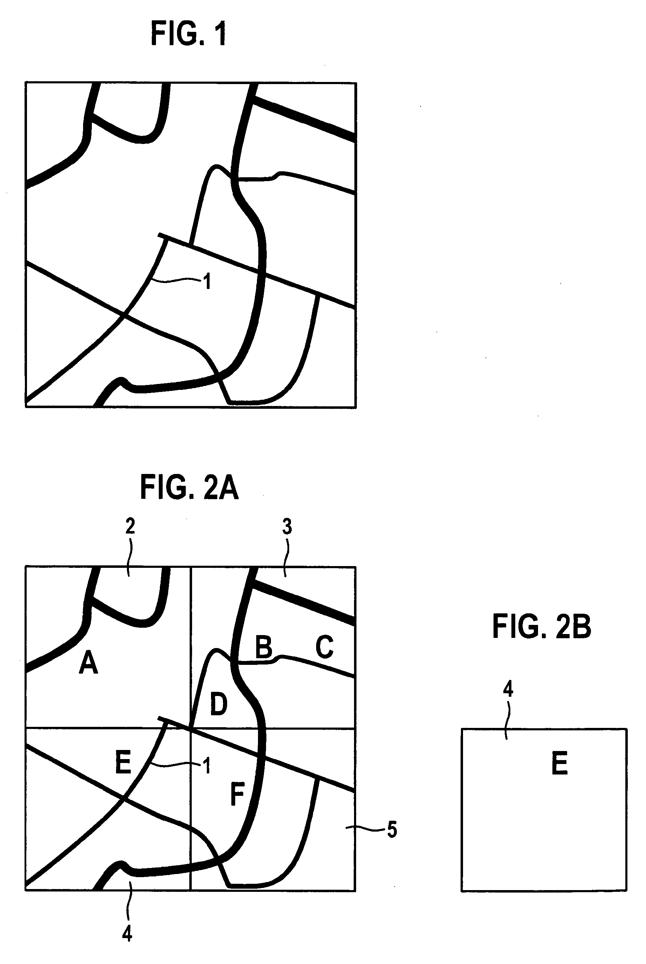

FIG. 1 zeigt eine Karte eines geographischen Teilbereichs, die geographische Daten aufweist, die in einer Karteneinheit der 1. Ordnung gespeichert sind, und von der Größe her einer quadratischen Karteneinheit der 1. Ordnung entspricht. Als gebogene Linien 1 sind Straßen dargestellt. Die Dicke der gebogenen Linien sagt etwas über die Bedeutung der jeweiligen Straße aus. Je dicker die Linie ist, desto bedeutender ist die dargestellte Straße.

FIG. 2A zeigt eine Karte, die aus der Karteneinheit der 1. Ordnung aus FIG. 1 und Karteneinheiten der 2. Ordnung zusammengesetzt ist und dem geographischen Teilbereich aus FIG. 1 entspricht. Die quadratische Karteneinheit der ersten Ordnung ist in 4 quadratische Karteneinheiten 2, 3, 4, und 5 der 2. Ordnung unterteilt, die jeweils wiederum in 4 Karteneinheiten der 3. Ordnung unterteilt sein können (nicht dargestellt) usw. (Quadtree). Die Grenzen der quadratischen Karteneinheiten der 2. Ordnung sind als Linien dargestellt. Zusätzlich zu den Straßen, die in der Karteneinheit der 1. Ordnung gespeichert sind, weist die Karte mehrere Objekte A, B, C, D, E und F auf, die in Karteneinheiten 2, 3, 4 und 5 der 2. Ordnung gespeichert sind. Vorzugsweise haben alle Karteneinheiten der gleichen Ordnung die gleiche Größe (d.h., sie umfassen ein gleich großes geographisches Gebiet) und sind rechteckig oder sogar quadratisch. Die Karteneinheiten entsprechen jeweils einem geographischen Gebiet, das etwa durch Längengrade und Breitengrade definiert ist, und sind hierarchisch organisiert. Dabei sind geographische Daten n-ter Ordnung zu Karteneinheiten n-ter Ordnung zusammengefasst, die jeweils einem geographischen Teilbereich entsprechen, wobei n eine natürliche Zahl ist, und sind geographische Daten (n+1)-ter Ordnung zu Karteneinheiten (n+1)-ter Ordnung zusammengefasst, die jeweils einem geographischen Unterbereich eines der Teilbereiche entsprechen. Karteneinheiten der 1. Ordnung bilden die oberste Hierarchiestufe. Die Karteneinheiten enthalten neben geographischen Daten eine eindeutige Identifizierungsnummer, die logisch aufgebaut ist, so dass es möglich ist, die Ordnungen der Karteneinheiten und gegebenenfalls deren relative Position zu einer übergeordneten Karteneinheit zu erkennen.

Der Vorgang des Zusammensetzens und Überlagerns von mehreren hierarchisch strukturierten Karten zu einer Karte, welche, wie in FIG. 2a dargestellt, die gesamten geographischen Daten der mehreren Karten aufweist, wird als Mergen bezeichnet. Der Vorgang des Mergens kann entweder vor dem Speichern der Karte auf einem Speichermedium stattfinden oder durch eine Navigationsvorrichtung durchgeführt werden. Wenn das Mergen erst in der Navigationsvorrichtung stattfindet, können die Karteneinheiten in einem geographischen Teilbereich ausgewählt werden, die für die Navigation unbedingt erforderlich sind, so dass der Umfang der Daten, die von der Navigationsvorrichtung gelesen und verarbeitet werden müssen, minimiert werden kann.

FIG. 2B zeigt die geographischen Daten der Karteneinheit 4 der 2. Ordnung aus FIG. 2A, in der das Objekt E gespeichert ist.

Wenn sich reale Objekte ändern, die als geographische Daten in dem geographischen Teilbereich aus FIG. 2A gespeichert sind, ist es notwendig, die geographischen Daten zu aktualisieren.

Das Aktualisieren umfasst allgemein folgende Schritte:
1. Erfassen von veränderten, neuen oder fehlenden geographischen Daten: aktuelle Rohdaten werden mit veralteten Rohdaten verglichen, aus denen die gespeicherten geographischen Daten gewonnen wurden. So wird eine Veränderung der geographischen Daten eines Objekts, das Fehlen eines früheren Objekts in den aktuellen geographischen Daten oder ein neues Objekt ermittelt. Die Ermittlung kann auch mehrere Objekte betreffen. Der Vergleich kann durch einen Computer durchgeführt werden.
2. Ermitteln der Karteneinheit, in welcher geographische Daten durch Verändern, Löschen oder Hinzufügen aktualisiert werden müssen: die Karteneinheit mit den zu aktualisierenden geographischen Daten ergibt sich aus der geographischen Lage und der Kategorie des Objekts (z.B. Straßen einer gewissen Bedeutung, Städte, Hausnummern, öffentliche oder private Einrichtungen wie Parkplätze oder Tankstellen), welches in einer Karteneinheit einer gewissen Ordnung zu speichern ist. Dabei zeigen Metadaten, wie sie jede Karteneinheit aufweist, beispielsweise an, Objekte welcher Kategorie die jeweilige Karteneinheit enthält bzw. enthalten könnte. Wenn die Ermittlung im Schritt 1 mehrere Objekte betraf, können auch mehrere Karteneinheiten ermittelt werden, deren geographische Daten aktualisiert werden müssen. Diese Karteneinheiten werden dann entsprechend in den folgenden Schritten 3 und 4 bearbeitet.
3. Erzeugen einer Karteneinheit mit aktualisierten geographischen Daten: auf Grundlage ursprünglicher geographischer und veränderter, neuer oder fehlender geographischer Daten wird eine aktualisierte Karteneinheit erzeugt. Dabei können nur Daten ersetzt, ergänzt oder gelöscht werden, oder die aktualisierte Karteneinheit vollständig aus den relevanten Rohdaten neu berechnet werden.
4. Ersetzen der Karteneinheit mit den zu aktualisierenden geographischen Daten durch die Karteneinheit mit aktualisierten geographischen Daten: Ersetzen bedeutet entweder Löschen einer vorhandenen Karteneinheit und Einfügen der Karteneinheit mit aktualisierten geographischen Daten oder das Speichern der Karteneinheit mit aktualisierten geographischen Daten zusammen mit den nicht aktualisierten Karteneinheiten.
5. Ermitteln der Karteneinheit, in welcher Verweisdaten durch Verändern, Löschen oder Hinzufügen aktualisiert werden müssen: jede Karteneinheit enthält Metadaten, die auch Verweisdaten zu den geographischen Daten enthalten. Beispielsweise kann eine Karteneinheit 1. Ordnung eine bestimmte Straße enthalten und eine Karteneinheit der 2. Ordnung Hausnummern dieser Straße enthalten. Verweisdaten der Karteneinheit der ersten Ordnung verknüpfen dann diese Hausnummern mit diesen Straßen. Es können auch mehrere Karteneinheiten ermittelt werden, deren Verweisdaten aktualisiert werden müssen. Diese Karteneinheiten werden dann entsprechend in den folgenden Schritten 7 und 8 bearbeitet.
6. Erzeugen einer Karteneinheit mit aktualisierten Verweisdaten: auf Grundlage ursprünglicher Verweisdaten und veränderter, neuer oder fehlender Verweisdaten wird eine aktualisierte Karteneinheit erzeugt.
7. Ersetzen der Karteneinheit mit zu aktualisierenden Verweisdaten durch die Karteneinheit mit aktualisierten Verweisdaten: das Ersetzen der Karteneinheit mit zu aktualisierenden Verweisdaten durch die Karteneinheit mit aktualisierten Verweisdaten wird in der Regel zusammen dem Ersetzen der Karteneinheit mit den zu aktualisierenden geographischen Daten durch die Karteneinheit mit aktualisierten geographischen Daten nach Schritt 4 durchgeführt. Ersetzen bedeutet entweder Löschen einer vorhandenen Karteneinheit und Einfügen der Karteneinheit mit aktualisierten geographischen Daten oder das Speichern der Karteneinheit mit aktualisierten geographischen Daten zusammen mit den nicht aktualisierten Karteneinheiten.
8. Die nach dem Aktualisieren erhaltenen Karteneinheiten werden dann gemergt, wie bereits beschrieben.

Im folgenden wird das Verändern, Einfügen und Löschen von Daten anhand von Beispielen erläutert.

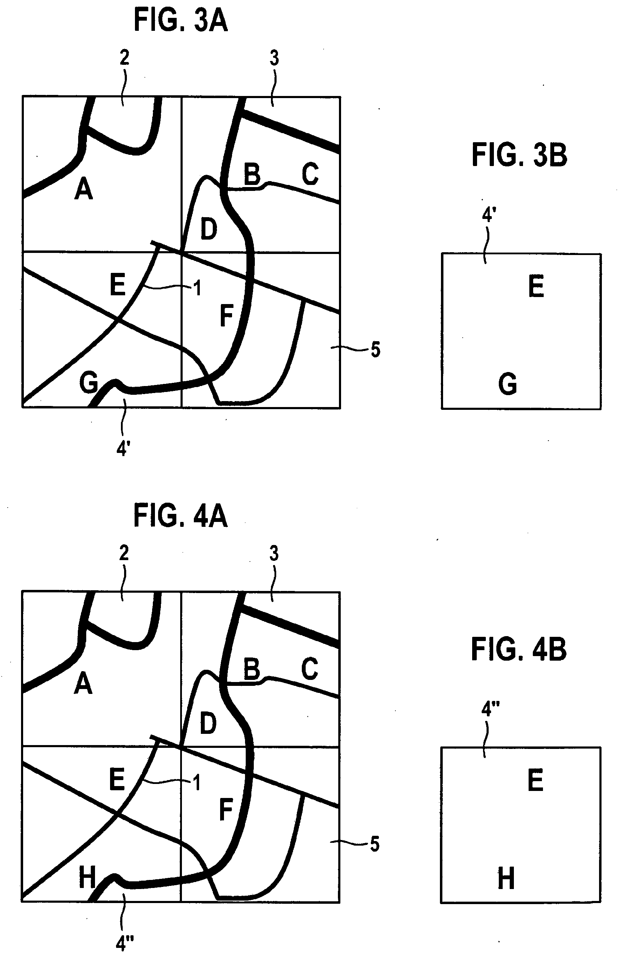

FIG. 3A zeigt eine aktualisierte Karte, die mit der Karte aus FIG. 2A bis auf die geographischen Daten einer aktualisierten Karteneinheit 4' identisch ist. Die auf der Karteneinheit 4 basierende aktualisierte Karteneinheit 4', die in FIG. 3B dargestellt ist, ist nach dem oben beschriebenen Verfahren um das Objekt G ergänzt, bei dem es sich beispielsweise um eine Tankstelle G handelt.

FIG. 4A zeigt eine weiter aktualisierte Karte, die mit der Karte aus FIG. 3A bis auf die geographischen Daten einer weiter aktualisierten Karteneinheit identisch ist. In der auf der Karteneinheit 4' basierenden aktualisierten Karteneinheit 4", die in FIG. 4B dargestellt ist, wurde das Objekt G zu einem Objekt H nach dem oben beschriebenen Verfahren verändert. Beispielsweise gehört die Tankstelle H nun zu einem anderen Konzern.

FIG. 2A kann auch als Beispiel einer aktualisierten Karte betrachtet werden, die mit der Karte aus FIG. 4A bis auf die geographischen Daten einer weiter aktualisierten Karteneinheit identisch ist. Die auf der Karteneinheit 4" basierende aktualisierte Karteneinheit 4, die in FIG. 2B dargestellt ist, wurde das Objekt H nach dem oben beschriebenen Verfahren gelöscht. Beispielsweise wurde die Tankstelle H geschlossen.

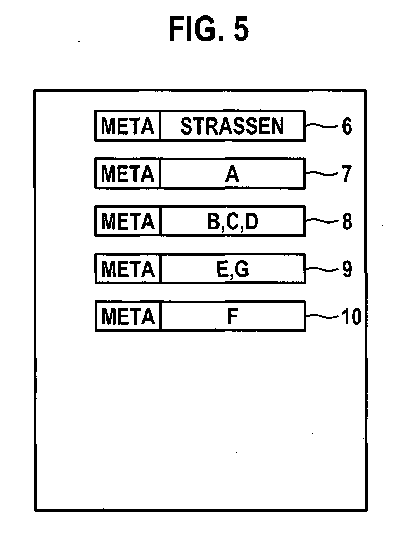

FIG. 5 zeigt ein Speichermedium mit aktualisierten geographischen Daten. Bei dem Speichermedium handelt es sich beispielsweise um eine austauschbare CD-ROM (Compact Disc - Read Only Memory) oder austauschbare DVD (Digital Versatile Disc).
Auf dem Speichermedium sind die Karteneinheit der 1. Ordnung und die Karteneinheiten 2 bis 5 der 2. Ordnung in zusammenhängenden Speicherbereichen 6 bis 10 gespeichert. Jede der Karteneinheiten umfasst Metadaten "META" und geographische Daten "STRASSEN, A, B, C, D, E, F G". Die Metadaten umfassen neben den bereits erwähnten Kategorien weitere Angaben zu den Karteneinheiten, wie etwa das geographische Gebiet, dem sie entsprechen und Attribute, die nähere Angaben zu den geographischen Daten enthalten, und sind getrennt von den geographischen Daten gespeichert.

## Patentansprüche

1. Verfahren zum Aktualisieren von geographischen Daten (1, A, B, C, D, E, F) eines geographischen Bereichs, die als Karteneinheiten (2, 3, 4, 5) zusammengefasst sind, wobei die Karteneinheiten (2, 3, 4, 5) hierarchisch strukturiert sind, wobei die Karteneinheiten (2, 3, 4, 5) einer n-ten Ordnung jeweils einem geographischen Teilbereich entsprechen, wobei n eine natürliche Zahl ist, wobei die Karteneinheiten (2, 3, 4, 5) einer (n+1)-ten Ordnung jeweils einem geographischen Unterbereich eines der Teilbereiche entsprechen, und wobei eine bestimmte Karteneinheit (4) durch eine Karteneinheit (4') mit aktualisierten geographischen Daten (G) ersetzt wird,
wobei jede Karteneinheit (2, 3, 4, 5) Metadaten enthält, die anzeigen, welche Kategorie von Objekten die jeweilige Karteneinheit enthält beziehungsweise enthalten könnte, und die Verweisdaten zu den geographischen Daten enthalten,
wobei die Verweisdaten auf geographische Objekte einer anderen Kategorie verweisen, die in Karteneinheiten (2, 3, 4, 5) gespeichert sind, welche eine im Vergleich zu den Karteneinheiten mit den jeweiligen Verweisdaten untergeordnete Ordnung haben.

2. Verfahren nach Anspruch 1, wobei die Karteneinheit (4') mit aktualisierten geographischen Daten (G) aus der bestimmten Karteneinheit (4) erzeugt wird, indem geographische Daten (G), die ein Objekt betreffen, hinzugefügt werden.

3. Verfahren nach Anspruch 1, wobei die Karteneinheit mit aktualisierten geographischen Daten aus der bestimmten Karteneinheit erzeugt wird, indem geographische Daten, die ein Objekt betreffen, geändert werden.

4. Verfahren nach Anspruch 1, wobei die Karteneinheit mit aktualisierten Daten aus der bestimmten Karteneinheit erzeugt wird, indem geographische Daten, die ein Objekt betreffen, gelöscht werden.

5. Verfahren nach einem der Ansprüche 1 bis 4, wobei eine weitere Karteneinheit mit Verweisdaten durch eine Karteneinheit mit aktualisierten Verweisdaten ersetzt wird.

## Claims

1. Method for updating geographical data (1, A, B, C, D, E, F) of a geographical area, which are summarized as map units (2, 3, 4, 5), the map units (2, 3, 4, 5) being hierarchically structured, in which the map units (2, 3, 4, 5) of an nth order correspond in each case to a geographical subarea, n being a natural number, the map units (2, 3, 4, 5) of an (n+1) th order respectively corresponding to a geographical subregion of one of the subareas, and a specific map unit (4) being replaced by a map unit (4') with updated geographical data (G),
in which each map unit (2, 3, 4, 5) contains metadata which show which category of objects the respective map unit contains or could contain, and which contains reference data relating to the geographical data, and
in which the reference data refer to the geographical objects of another category which are stored in map units (2, 3, 4, 5) which are of a subordinate order in comparison with the map units with the respective reference data.

2. Method according to Claim 1, in which the map unit (4') is produced using updated geographical data (G) from the specific map unit (4), this being done by adding geographical data (G) which relate to an object.

3. Method according to Claim 1, in which the map unit is produced using updated geographical data from the specific map unit, this being done by changing geographical data which relate to an object.

4. Method according to Claim 1, in which the map unit is produced using updated data from the specific map unit, this being done by deleting geographical data which relate to an object.

5. Method according to one of Claims 1 to 4, in which a further map unit with reference data is replaced by a map unit with updated reference data.

## Revendications

1. Procédé pour actualiser des données géographiques (1, A, B, C, D, E, F) d'une zone géographique, lesquelles sont regroupées en tant qu'unités cartographiques (2, 3, 4, 5), les unités cartographiques (2, 3, 4, 5) étant structurées hiérarchiquement, les unités cartographiques (2, 3, 4, 5) d'un n-ième ordre correspondant à chaque fois à une zone géographique partielle, n étant un entier naturel, les unités cartographiques (2, 3, 4, 5) d'un (n+1)-ième ordre correspondant à chaque fois à une sous-zone géographique de l'une des zones partielles, et une unité cartographique définie (4) étant remplacée par une unité cartographique (4') ayant des données géographiques (G) actualisées,
chaque unité cartographique (2, 3, 4, 5) contenant des métadonnées qui indiquent quelle catégorie d'objets contient ou pourrait contenir l'unité cartographique respective et qui contiennent des données de renvoi vers les données géographiques,
les données de renvoi renvoyant sur des objets géographiques d'une autre catégorie, lesquels sont enregistrés dans des unités cartographiques (2, 3, 4, 5) qui possèdent un ordre subordonné par rapport aux unités cartographiques avec les données de renvoi respectives.

2. Procédé selon la revendication 1, selon lequel l'unité cartographique (4') ayant des données géographiques (G) actualisées est générée à partir de l'unité cartographique définie (4) en ajoutant des données géographiques (G) qui concernent un objet.

3. Procédé selon la revendication 1, selon lequel l'unité cartographique ayant des données géographiques actualisées est générée à partir de l'unité cartographique définie en modifiant des données géographiques qui concernent un objet.

4. Procédé selon la revendication 1, selon lequel l'unité cartographique ayant des données actualisées est générée à partir de l'unité cartographique définie en effaçant des données géographiques qui concernent un objet.

5. Procédé selon l'une des revendications 1 à 4, selon lequel une unité cartographique supplémentaire ayant des données de renvoi est remplacée par une unité cartographique ayant des données de renvoi actualisées.
